# EUROPÄISCHE PATENTSCHRIFT

(11) **EP 2 710 157 B1**
(45) Veröffentlichungstag und Bekanntmachung des Hinweises auf die Patenterteilung: **11.01.2017**
(21) Anmeldenummer: 12729855.2
(22) Anmeldetag: 16.05.2012
(51) Int. Cl.: C21D 1/09, C21D 1/34, C21D 9/00, B23K 26/00, B23K 26/20, B21D 53/88

(54) **WÄRMEBEHANDLUNG VON HÄRTBAREN BLECHBAUTEILEN**
HEAT TREATMENT OF HARDENABLE SHEET METAL COMPONENTS
TRAITEMENT THERMIQUE DE PIÈCES EN TÔLE POUVANT ÊTRE TREMPÉES

(30) Priorität: 19.05.2011 DE 102011101991
(43) Veröffentlichungstag der Anmeldung: 26.03.2014
(73) Patentinhaber: Volkswagen Aktiengesellschaft, 38436 Wolfsburg (DE)
(72) Erfinder: KOTZIAN, Mathias, 38446 Wolfsburg (DE); MALEK, Roland, 38440 Wolfsburg (DE); MEKKAOUI ALAOUI, Mohamed, 30659 Hannover (DE)
(74) Vertreter: Braun, Hartmut
(86) Internationale Anmeldenummer: PCT/EP2012/002105
(87) Internationale Veröffentlichungsnummer: WO 2012/156084

(56) Entgegenhaltungen:
- ES-A1- 2 345 029
- US-A1- 2010 084 892
- US-A1- 2011 016 719

## Beschreibung

Die Erfindung betrifft ein Verfahren zur Wärmebehandlung eines härtbaren Blechbauteils sowie einer Vorrichtung zur Ausführung des Verfahrens sowie ein Teilverbund und ein Kraftfahrzeug, jeweils nach den Oberbegriffen der unabhängigen Patentansprüche.

Pressgehärtete Blechbauteile mit abgegrenzten weichen Bauteilbereichen für den Einsatz in crash-optimierten Kraftfahrzeugen sowie entsprechende Verfahren und Vorrichtungen zur Herstellung der Blechteile sind aus dem Stand der Technik bekannt, beispielsweise aus der DE 10 2008 021 492 B3, die das Herstellen von gehärteten Bauteilen aus härtbarem Stahl beschreibt, wobei die Bauteile in definierten Bereichen eine höhere Duktilität aufweisen als in anderen Bereichen. Dabei erfolgt ein Erwärmen der Bauteile auf Gestellen in einem Durchlaufofen auf eine Temperatur über den AC₃ Punkt der Legierung und ein gezieltes Nacherwärmen von definierten Bereichen der Bauteile, wobei die Bauteile nach der Entnahme aus einer Presse auf die noch warmen Gestelle erneut aufgelegt werden. Aus der DE 197 43 802 C2 ist bekannt, zur Herstellung eines metallischen Formbauteils für Kraftfahrzeugkomponenten eine Platine aus härtbarem Stahl bereitzustellen, diese Platine zunächst auf eine Temperatur zwischen 900 °C und 950 °C homogen zu erwärmen und anschließend partielle Bereiche des Formbauteils in einer Zeit von weniger als 30 sek auf eine Temperatur zwischen 600 °C und 900 °C mittels induktiver Erwärmung zu bringen. Aus der DE 10 2006 054 389 A1 ist es bekannt, pressgehärtete Bauteile zur Erzeugung einer definierten Duktilität mit temperaturgesteuerten Thermodecken bereichsweise abgedeckt und in definierten Bereichen mit unterschiedlichen Temperaturen zu beaufschlagen. Aus der DE 2008 055 514 A1 ist ein Verfahren zur Herstellung eines Bauteils bekannt, bei dem das Bauteil nach einem Warmumformen und/oder Presshärten angelassen wird, wobei zum Erreichen von verbesserten Bruchdehnungseigenschaften, die Anlasszeit bei einer Anlasstemperatur von etwa 500 °C mindestens 20 min, bei einer Anlasstemperatur von etwa 550 °C mindestens 5 min bzw. bei einer Anlasstemperatur von etwa 600 °C mindestens 3 min beträgt. Bei einem weiteren, aus der DE 197 23 655 B4 bekannten Verfahren zur Herstellung eines Stahlblechprodukts erfolgt ein Härten des Produkts durch schnelles Abkühlen von der austenitischen Temperatur, während es in einem Werkzeug ist, wobei in dem Produkt ungehärtete Bereiche verbleiben und die Bereiche getempert werden, nachdem das Produkt aus dem Werkzeug entnommen wurde. Aus der DE 10 2009 050 623 A1 ist es bekannt, in einem Zwischenwerkzeug Bereiche eines zuvor erwärmten Bauteils gezielt zu temperieren, um unterschiedliche Werkstoffeigenschaften in den Bereichen einzustellen, wobei zur Temperierung der Bereiche Kühl- oder Heizflächen im Zwischenwerkzeug eingesetzt werden. Aus der DE 10 2009 023 195 A1 ist es andererseits bekannt, einen nicht oder minder zu härtenden Bereich eines Bauteils abzudecken und das Bauteil partiell in einem Ofen zu erwärmen, wobei anschließend eine Presshärtung des Bauteils erfolgt. Außerdem ist aus der DE 10 2008 030 297 A1 ein Verfahren zur Herstellung eines Formbauteils mit mindestens zwei Gefügebereichen mit unterschiedlicher Duktilität aus einem Bauteilrohling aus härtbarem Stahl bekannt, wobei der Bauteilrohling bereichsweise unterschiedlich erwärmt und dann in einem Werkzeug geformt und bereichsweise gehärtet wird. In einer Erwärmungseinrichtung wird der Bauteilrohling auf eine homogene Temperatur kleiner als der AC₃ Punkt der Legierung erwärmt und anschließend mittels eines Infrarotlampenfeldes in Bereichen erster Art auf eine Temperatur über den AC₃ Punkt der Legierung gebracht und in dem Werkzeug in den Bereichen erster Art gehärtet.

Aus der EP 1 842 617 A1 ist ein Verfahren zum partiellen Härten von nicht durchgehärteten Blechen bekannt, bei welchem ein Laserstrahl verwendet wird und eine Schutzbegasung mit einem Schutzgas erfolgt. Dabei wird das Schutzgas zur Abschreckung des partiell erwärmten Blechs verwendet und über die Schutzbegasung einer Abschreckung des partiell erwärmten Bereichs des Blechs unterhalb der Martensit-Finish-Temperatur vorgenommen. Dabei wird der Martensitanteil des Gefüges über die Schutzbegasung eingestellt, wobei das Blech in den nicht gehärteten Bereichen ein maximales Dehnverhalten aufweisen soll.

Aus der Schrift US 2011/0016719 A1 ist weiterhin ein Verfahren zur Herstellung von Fahrzeugbauteilen, insbesondere Stahlblechen bekannt, bei dem in einem ersten Verfahrensschritt ein Press-Umformen des Bauteiles erfolgt, daran anschließend ein Abschrecken mittels sehr schnellen Abkühlens des Bauteiles, sowie einer daran anschließenden partiellen Wärmebehandlung des Bauteiles, beispielsweise mit einem Laser, wobei entsprechende Metall-Gefüge gebildet werden um unterschiedliche Härtegrade im Bauteil zu erzeugen. Dabei sind die mit dem Laser nachbearbeiteten Bereiche senkrecht zur Längsachse des Bauteiles angeordnet.

Schließlich ist aus ES 2 345 029 ein Verfahren zum lokalen Tempern von pressgehärteten Bauteilen bekannt, wobei die zu behandelnden Zonen mit einem Laserstrahl auf 400-900°C aufgeheizt und danach langsam abgekühlt werden. Aufgabe der vorliegenden Erfindung ist es, den Stand der Technik zu verbessern, insbesondere eine prozesssichere und bereichsgenaue Enthärtung von Teilbereichen eines Blechbauteils, insbesondere für ein Kraftfahrzeug, zu ermöglichen und zudem eine erhöhte Zug- und Riss-Festigkeit dieser Bauteile in ihren Flanschbereichen zu erzielen,

Die Aufgabe wird erfindungsgemäß mit den Merkmalen der unabhängigen Patentansprüche gelöst. Vorteilhafte Ausführungsformen sind in den Unteransprüchen zusammengefasst.

Das erfindungsgemäße Verfahren zur Wärmebehandlung eines härtbaren Blechbauteils, insbesondere für ein Kraftfahrzeug mit Presshärtung des Blechbauteils in einem Umformpresswerkzeug, Entnehmen des Blechbauteils aus dem Umformpresswerkzeug zeichnet sich aus durch Bilden von lokal begrenzten weichen Bereichen des Blechteils mittels lokalem Tempern vorgegebener Teilbereiche des Blechteils durch ein Laserstrahlverfahren, bei dem die vorgegeben Teilbereiche einem Laserstrahl ausgesetzt werden. Der erfindungsgemäße Einsatz eines Laserstrahlverfahrens ermöglicht es vorteilhaft, insbesondere kleinere Bereiche des Blechbauteils räumlich sehr genau definiert zu enthärten, wobei bei relativ geringen Investitionskosten und hoher Flexibilität an sich bekannte Laserstrahleinrichtungen vorteilhaft eingesetzt werden können. Vorzugsweise erfolgt das lokale Tempern während eines Transportierens und/oder während eines Aufenthalts des Blechteils in einer Arbeits- oder Lagerungsstation.

Das härtbare Blechbauteil besteht vorzugsweise aus einem Material aus einem Stahl 22MnB5 oder einer an sich bekannten Stahllegierung, welche Eisen sowie Gehalte an weiteren Elementen wie beispielsweise (in Gewichtsprozent) 0,20-0,6% C, bis zu 0,5% Si, 0,5-2,0% Mn, bis zu 1,0% Cr, bis zu 0,025% P, bis zu 0,01% S, 0,01-0,06% Al sowie optional Gehalte von einem oder mehreren Elementen aus der Gruppe N, Ti, B, No, Co, Ni aufweist. Derartige Blechbauteile werden aus einer Platine mit einer Dicke zwischen 0,8 und 3 mm gefertigt. Erfindungsgemäß werden die vorgegebenen Teilbereiche des Blechteils bei dem lokalen Tempern auf eine Temperatur in einem Bereich zwischen 500 °C und 1000 °C für eine Zeitdauer von einigen Sekunden bis zu 1 Minute gebracht. Anschließend erfolgt ein relativ schnelles Abkühlen des erwärmten Materials, wonach eine gewünschte reduzierte Härte von lokal begrenzten weichen Bereichen des Blechteils erreicht wird.

Eine weitere Ausführungsform der Erfindung zeichnet sich dadurch aus, dass im Blechbauteil mittels Presshärten Martensitbereiche und anschließendem lokalen Tempern in den vorgegebenen Teilbereichen oder im Bereich der lokal begrenzten weichen Teilbereiche Neumartensitbereiche gebildet werden. Ein pressgeformtes Bauteil mit einem martensitischen Gefüge zeichnet sich durch hohe Festigkeiten aus und lässt sich in dem Umformpresswerkzeug bei hohen Temperaturen bei relativ geringen Kräften komplex formen. Die bei dem an das Presshärten anschließenden lokalen Tempern gebildeten Neumartensitbereiche weisen vorteilhaft eine geringere Härte auf als die mittels Presshärten hergestellten Martensitbereiche. Als Martensitbereiche werden hier Bereiche des Blechbauteils bezeichnet, die ein an sich bekanntes Gefüge aus Martensit aufweisen. Wie an sich bekannt ist, wird zur Bildung eines Martensitgefüges ein Blech von einer Temperatur einer Hochtemperaturphase unter die Gleichgewichtstemperatur zu einer Niedertemperaturphase abgekühlt. Als Neumartensitbereich wird hier ein aus einem Martensitbereich mittels der direkten Wärmeeinbringung durch den Laser durch lokales Überschreiten der Austenitisierungstemperatur und anschließendes rasches Abkühlen erzeugter Martensit bezeichnet.

Eine weitere Ausführungsform der Erfindung zeichnet sich dadurch aus, dass im Blechbauteil in räumlich zwischen den Marteinsitbereichen und den Neumartensitbereichen angeordnete Wärmeeinflusszonen mittels lokalem Tempern im Bereich der lokal begrenzten weichen Teilbereiche Zonen aus angelassenem Martensit gebildet werden. Die im Blechbauteil zwischen den mittels Presshärten hergestellten Martensitbereichen und den Neuemartensitbereichen gebildeten Zonen aus angelassenem Martensit sind Bereiche, in denen die Austenitisierungstemperatur beim lokalen Tempern nicht überschritten wurde. Die Zonen aus angelassenem Martensit weisen eine Härte auf, die zwischen der Härte der mittels Presshärten hergestellten Martensitbereiche und der Härte der durch lokales Tempern hergestellten Neumartensitbereiche liegt. Die räumliche Ausdehnung der Zone aus angelassenem Martensit ist insbesondere abhängig von der Abkühlgeschwindigkeit der vom Laserstrahl beaufschlagten Bereiche und nimmt mit abnehmender Abkühlgeschwindigkeit zu. Vorteilhaft kann sich eine besagte Zone unterhalb eines Neumartensitbereichs erstrecken, wobei besonders vorteilhaft eine Erstreckung der Zone bis zu einem Randbereich oder einem Oberflächenbereich einem dem Neumartensitbereich gegenüber angeordneten Randbereich des Blechbauteils ist, da dann ein verbessertes Bruch - Dehnungsverhalten der Blechbauteils im Neumartensitbereich sowie im Bereich der Zone, insbesondere bei einer im Neumartensitbereich angeordneten Fügeverbindung mit einem Fügepartner des Blechbauteils.

Die lokal begrenzten weichen Bereiche haben beispielsweise eine lineare Ausdehnung zwischen 5mm und 50mm.

Eine weitere Ausführungsform der Erfindung zeichnet sich dadurch aus, daß zumindest 30% der Umfangslinie des lokal begrenzten weichen Teils in denen Neumartensit gebildet wird, in einem Randbereich des Blechbauteils liegt. Über den Randbereich des Blechbauteils wird Wärme in geringerem Maße abgeführt als über im Bulk des Blechbauteils liegende Bereiche. Aufgrund der reduzierten Wärmeableitung ist die Abkühlungsgeschwindigkeit der lokal temperierten Teilbereiche nach der Laserbehandlung geringer als im Bulk des Bauteils, so dass die Wärmeeinwirkung auf das Material und damit die Zone des angelassenen Martensits größer wird.

Mit dem erfindungsgemäßen Verfahren können daher auf eine fertigungsgerechte und prozesssichere Weise Flansche aus pessgehärteten Blechbauteilen mit relativ weichen Teilbereichen hergestellt werden, die das Crashverhalten des Blechbauteils günstig beeinflussen.

Eine weitere Ausführungsform der Erfindung zeichnet sich dadurch aus, dass das Blechteil mittels Presshärten auf eine Härte von zumindest 400HV10 und mittels lokalem Tempern mittels des Laserstrahlverfahren in den lokal begrenzten weichen Bereichen auf eine Härte von höchstens 350HV10 gebracht wird. Wenn ein Blechteil auf eine einheitliche Härte bzw. Festigkeit von 400 HV10 gebracht ist, ist es für den Einsatz im Kraftfahrzeugbau, insbesondere im Karosseriebau, in Hinblick auf Härte und Festigkeit gut geeignet. Wird es mittels lokalem Tempern in den lokal begrenzten weichen Bereichen auf eine Härte von höchstens 350HV10 gebracht, kann es starken mechanischen Belastungen, insbesondere hochdynamischen Belastungen besser stand halten. Als Härte wird hier der mechanische Widerstand bezeichnet, den ein Werkstoff der mechanischen Eindringung eines härteren Prüfkörpers entgegensetzt. Die Härtewerte sind entsprechend einer Härteprüfung nach Vickers ermittelt worden, die zur Prüfung harter und gleichmäßig aufgebauter Werkstoffe dienen und auch bei dünnwandigen oder oberflächengehärteten Werkstücken eingesetzt werden können; vgl. DIN EN Iso 6507-1:2005 bis -4:2005. Hierbei bezeichnet "10" die Prüfkraft bei der Härteprüfung in Kilopond.

Zweckmäßigerweise wird das Blechteil gemäß einer weiteren Ausführungsform der Erfindung in an den lokal begrenzten weichen Bereichen angrenzenden Übergangsbereichen mittels lokalen Tempern auf eine Härte zwischen 220HV10 und 470HV10 gebracht, wobei vorzugsweise die Härte von einem niedrigeren Wert auf die Härte des Grundmaterials ansteigt. Vorteilhaft beträgt die Härte im Mittel im Übergangsbereich ca. 330HV10.

Eine weitere Ausführungsform der Erfindung zeichnet sich dadurch aus, dass ein Bilden von lokal begrenzten Teilbereichen mittels lokalem Tempern mittels eines Laserstrahls einer Anlage zum Laserbeschnitt oder zum Zusammenbau von Blechbauteilen erfolgt, womit vorteilhaft diese Anlagen einer zusätzlichen Funktion zugeführt werden, wobei Investitionskosten reduziert werden können und das Handling der Blechbauteile erleichtert wird.

Das Verfahren zeichnet sich ferner dadurch aus, dass ein Bilden von Neumartensitbereichen in Teilbereichen des Blechteils erfolgt, in denen Fügepunkte oder Fügebereiche vorgesehen sind.

Ferner kann ein Laserstrahlverfahren mit einer Temperaturregelung, beispielweise unter Verwendung eines Sensors, wie eines Pyrometers oder einer Kamera, eingesetzt werden. Günstigerweise wird dabei die Temperatur des sensorierten Bereichs bestimmt und dabei kontrolliert auf eine gewünschte Temperatur gebracht. Bei der Bildung der Zonen aus angelassenem Martensit wird eine Erwärmung auf eine Temperatur zwischen 750°C und 800°C, also unterhalb der Austenitisierungstemperatur des Blechmaterials, gewährleistet. Prozesstechnisch kann es auch günstig sein, eine Erwärmung auf lediglich eine Temperatur zwischen 750°C und 800°C vorzusehen.

Die erfindungsgemäße Vorrichtung zur Durchführung des Verfahrens nach einem der vorhergehenden Ansprüche umfassend ein
- Mittel zur Presshärtung des Blechbauteils in einem Umformpresswerkzeug,
- Mittel zum Entnehmen und Transportieren des Blechbauteils aus dem Umformpresswerkzeug zu einer Arbeits- oder Lagerungsstation,
zeichnet sich dadurch aus, dass als Mittel zum Bilden von lokal begrenzten weichen Bereichen eine Laserstrahlvorrichtung vorgesehen ist, in der die vorgegeben Teilbereiche einem Laserstrahl ausgesetzt werden können. Die erfindungsgemäße Vorrichtung hat die gleichen Vorzüge, wie das erfindungsgemäße Verfahren.

Die Laserstrahlvorrichtung kann als Anlage zum Laserbeschneiden oder als Anlage zum Zusammenbau ausgebildet sein und umfasst typischerweise eine Laserstrahlquelle, eine Einrichtung zur Strahlführung und eine üblicherweise bewegbare Fokussieroptik. Zum Schneiden von Blechbauteilen erforderliche Leistungsdichten des Lasers liegen in Bereichen von 10⁶ bis 10⁹ Watt/Cm². Beispielsweise kann vorteilhaft ein Diodenlaser mit einer Leistung von 4000 bis 10000 Watt bei dem erfindungsgemäßen Verfahren zum lokalen Tempern eingesetzt werden. Durch Variation eines Abstandes eines Laserstrahlkopfes, einer Spotbreite, einer Vorschubgeschwindigkeit des Spots relativ zum Bauteil sowie einer Aufheizzeit kann die gewünschte Reduzierung der Härte eingestellt werden kann. Beispielsweise kann mit einem Diodenlaser mit einer Leistung von 4000 Watt bei einem Abstand des Diodenlaserkopfs von 250 mm, einer Spotbreite von 13 mm auf der formlaserstrahlbeaufschlagten Oberfläche des Blechbauteils und einem Vorschub von 50 mm/sek ein Blechbauteil mit einer einheitlichen Härte von 503HV10 in dem vom Laserstrahl beaufschlagten Teilbereich einer Länge von 450 mm auf eine verminderte Härte von 265HV10 innerhalb einer Zeit von 9 sek gebracht werden. Durch Variation der Parameter Abstand, Spotbreite und Vorschubgeschwindigkeit kann so die Leistungsdichte beliebig eingestellt werden. Ferner kann die Laserstrahlvorrichtung eine Temperaturregelung vorsehen, wie oben beschrieben.

Das erfindungsgemäße Verfahren zur Herstellung eines Teileverbunds für ein Kraftfahrzeug, umfassend ein Herstellen wenigstens eines ersten pressgehärteten Blechbauteils und Fügen dieses pressgehärteten Blechbauteils mit wenigstens einem zweiten Bauteil mittels wenigstens einer Fügeverbindung in einem lokal begrenzten weichen Teilbereich zeichnet sich dadurch aus, dass beim Herstellen des pressgehärteten Blechbauteils ein Verfahren, wie oben dargestellt, eingesetzt wird. Der lokal begrenzte weiche Teilbereich wird erfindungsgemäß demnach mittels lokalem Tempern mittels eines Laserstrahlverfahrens hergestellt, bei dem vorgegebene Teilbereiche einem Laserstrahl ausgesetzt werden. Im Bereich der Fügeverbindung weist das Blechbauteil daher eine geringere Härte auf gegenüber den anderen Bereichen des pressgehärteten Blechbauteils, womit die Bildung von Rissen in den Bereich der Fügeverbindung vermieden oder verringert wird. Die Fügeverbindung kann dabei mittels aller bekannten Fügeverfahren, wie beispielsweise Widerstandspunktschweißen, Laserschweißen, Elektronenstrahlschweißen, Druckfügung oder dergleichen hergestellt werden. Das zweite Bauteil kann aus einem oder mehreren der Anwendungsmaterialien Stahl, Aluminium, Kunststoff, Faserverbund- oder Hybridblechen bestehen. Ein erfindungsgemäßes Kraftfahrzeug mit einem Teileverbund, hergestellt nach einem der vorhergehend dargestellten Verfahren, zeichnet sich dadurch aus, dass der Teileverbund ein Bestandteil der Kraftfahrzeugstruktur, insbesondere der Karosseriestruktur, einer Karosseriestruktur eines Anhängerteils oder eines Fahrwerks ist. Ein derartiges Fahrzeug hat einen gegenüber einem herkömmlichen Fahrzeug günstigeres Verhalten bei einem Crash.

Eine weitere Ausführungsform des Kraftfahrzeugs zeichnet sich dadurch aus, dass das pressgehärtete Blechbauteil eine Seitenwandsäule, ein Seitenschweller, ein Motorträger, ein Hecklängsträger, ein Dachspriegel, ein Windlauf, ein Stirnwandstützträger, eine Tunnelverstärkung, ein Stoßfängerträger, ein Innenteil eines Karosserieanhängers oder ein Fahrwerksbauteil ist.

Weitere Ausführungsformen der Erfindung werden unabhängig von ihrer Zusammenfassung in den Patentansprüchen im Folgenden anhand von Zeichnungen genauer beschrieben. Dabei zeigen in schematischer Darstellung
Figur 1
   eine Pressenstraße mit einem Umformpresswerkzeug
Figur 2
   ein Blechbauteil mit Bereichen hoher Härte und lokal begrenzten weichen Bereichen
Figur 3
   ein Blechbauteil mit Bereichen hoher Härte, einem lokal begrenzten weichen Bereich und einem Übergangsbereich
Figur 4
   einen Schnitt durch ein Blechbauteil mit einem lokal begrenzten weichen Bereich, Bereichen hoher Härte sowie einem Übergangsbereich.

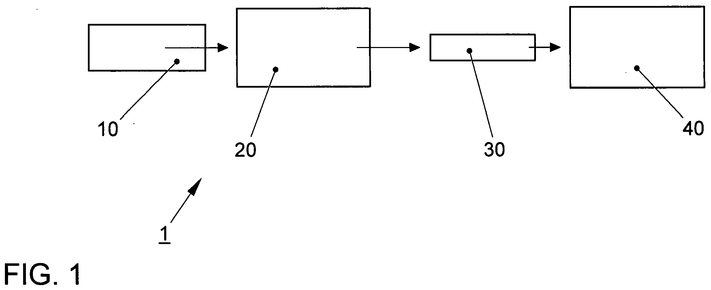

Figur 1 zeigt in Draufsicht eine Pressenstraße 1 zur Bearbeitung eines als Platine ausgebildeten härtbaren Blechbauteils 10, welches zu einem Umformpresswerkzeug 20 transportiert wird und nach erfolgtem Umformpressen, bei dem es gehärtet wurde, dem Werkzeug 10 entnommen und als gehärtetes Blechbauteil 30 einem lokalen Tempern in vorgegebenen Teilbereichen mittels eines Laserstrahlverfahren unterzogen wird, um anschließend in einer Lagerungsstation in einem Fertigteilbehälter 40, der vorzugsweise wärmeisoliert ist, abgelegt zu werden. Das Blechbauteil 30 wird in der Darstellung der Figur 1 während des, vorzugsweise mechanisierten Transports mittels eines Laserstrahlverfahrens, bei dem die vorgegebenen Teilbereiche einem Laserstrahl ausgesetzt werden, lokal getempert, woraufhin im Folgenden noch genauer eingegangen wird.

Alternativ kann das Bilden von lokal begrenzten weichen Bereichen des Blechteils 30 auch während eines Aufenthalts des Blechbauteils 30 in einer Arbeitsstation erfolgen. Alternativ kann auch ein mechanisierter Transport des Blechbauteils 30 nach dem Bilden von lokal begrenzten weichen Bereichen in weiteren Stationen der Pressenstraße 1, wie beispielsweise einer Beschnitt- oder einer Nachformstation erfolgen. Erfolgt das lokale Tempern während des Transports des Blechteils 30, kann dazu durch eine Mechanisierung, z. B. durch einen Roboter, das Blechbauteil 30 in einer definierten Lage zum Laserstrahl positioniert werden und bei feststehender Laserstrahlquelle, insbesondere auch einem feststehenden Laserstrahl, das Blechbauteil zum Temperieren relativ zur Laserstrahlquelle, insbesondere auch zum Laserstrahl, bewegt werden.

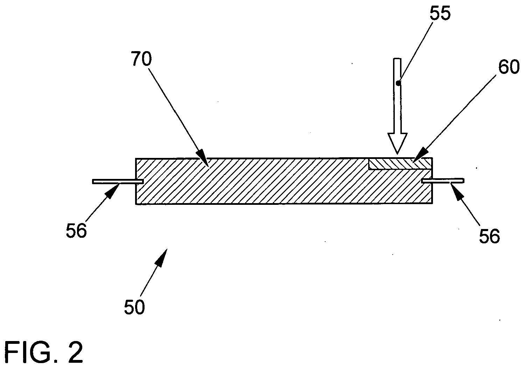

Figur 2 veranschaulicht bei einem Blechbauteil 50 das Bilden von lokal begrenzten weichen Bereichen 60 mit einer Härte von 220HV10 bis 330HV10, wobei das Blechbauteil in den nicht mittels lokalem Tempern behandelten Bereichen 70 eine einheitliche Härte von ca. 470HV10 aufweist. Das Bauteil 50 wird dabei mittels einer nur ansatzweise dargestellten Mechanisierung 56 relativ zu einem Laserstrahl 55 bewegt, wobei der lokal temperierte Teilbereich 60 für eine Zeitdauer von 1 sek bis 1 min auf eine Temperatur zwischen 450 °C und 800 °C gebracht wird.

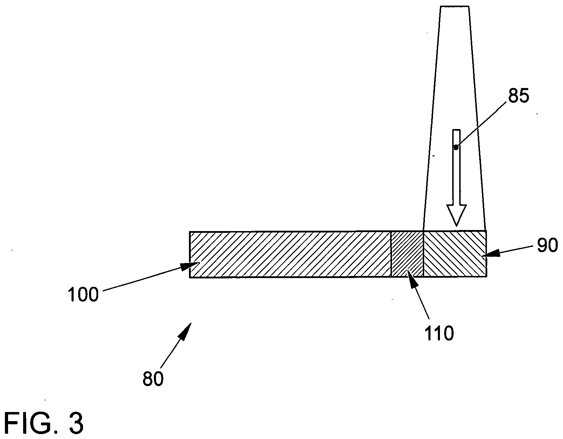

In Figur 3 ist eine weitere Ausführungsform der Erfindung veranschaulicht, bei der ein Blechbauteil 80 mit einer einheitlichen Härte von ca. 470HV10 in Bereichen 100 mittels Laserstrahl 85 einem lokalen Tempern von Teilbereichen auf eine Temperatur zwischen 500 °C und 1000 °C unterzogen wird, so dass ein lokal begrenzter weicher Teilbereich 90 mit einer reduzierten Härte von ca. 220HV10 gebildet wird. Zwischen den Bereichen 100 und dem Teilbereich 90 erstreckt sich eine Wärmeeinflusszone 110, die ausgehend von dem Teilbereich 90 eine zunehmende Härte aufweist, bis die Härte des Grundmaterials von 470HV10 erreicht ist. Im Mittel beträgt die Härte der Wärmeeinflusszone 110 etwa 330HV10.

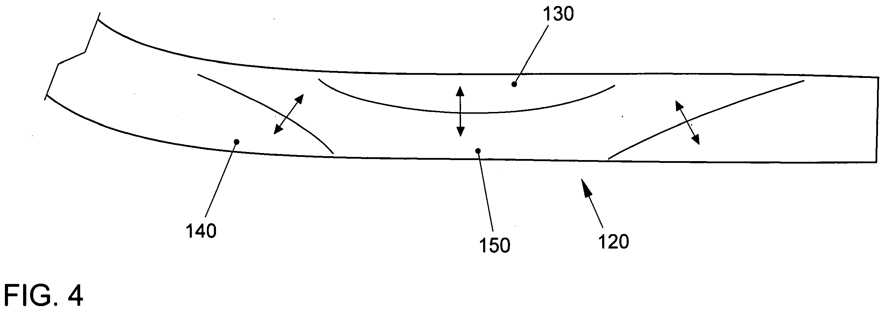

Figur 4 zeigt in einer Schnittdarstellung ein mit dem erfindungsgemäßen Verfahren wärmebehandeltes Blechbauteil 120 mit einem lokal begrenzten weichen Teilbereich 130, einer Übergangszone 150 und Bereichen 140 mit einem Martensitgefüge und einer einheitlichen Härte. In dem lokal begrenzten weichen Bereich 130 entsteht durch lokales Überschreiten der Austenitisierungstemperatur und anschließendes rasches Abkühlen ein Martensitgefüge (Neumartensitbereich) im Material des Blechbauteils 120, während die den Teilbereich 130 umgebende Zone 150 ein Gefüge aus einem angelassenen Martensit aufweist. Die Zone 150 entspricht einer Wärmeeinflusszone des lokalen Tempern. Die räumliche Ausdehnung der Zone 150 aus angelassenem Martensit ist insbesondere abhängig von der Abkühlgeschwindigkeit der mit dem Laserstrahl behandelten Bereiche und nimmt mit abnehmender Abkühlgeschwindigkeit zu.

Der Teilbereich 130 kann als Fügestelle oder Fügebereich, insbesondere für ein Schweissfügeverfahren vorgesehen sein. Vorteilhaft wird das Blechbauteil 120 in einem geeigneten Prozessschritt im Teilbereich 130 mit einem Fügemittel für eine Fügeverbindung mit einem Fügepartner versehen. Beim Schweissen erfolgt durch Schmelzen des Materials typischerweise eine Martensitbildung im Bereich der Fügestelle oder des Fügebereichs, so dass in diesem Fall prozesstechnisch auf eine genaue Temperaturregelung, zumindest im Neumartensit bereich, Teilbereich 130, verzichtet werden kann.

### Bezugszeichenliste

- 1: Pressenstrasse
- 10: Blechbauteil
- 20: Umformpresswerkzeug
- 30: Transportieren
- 40: Arbeits- oder Lagerstation
- 50: Blechteil
- 55: Laserstrahl
- 60: Lokal begrenzter weicher Bereich
- 70: Bereich hoher Härte
- 80: Blechteil
- 85: Laserstrahl
- 90: Lokal begrenzter weicher Bereich
- 100: Bereich hoher Härte
- 110: Übergangsbereich / Wärmeeinflusszone
- 120: Blechteil
- 130: Lokal begrenzter weicher Bereich
- 140: Bereich hoher Härte
- 150: Übergangsbereich

## Patentansprüche

1. Verfahren zur Wärmebehandlung eines härtbaren Blechbauteils, insbesondere für ein Kraftfahrzeug mit
- Presshärtung des Blechbauteils in einem Umformpresswerkzeug,
- Entnehmen des Blechbauteils aus dem Umformpresswerkzeug,
bilden von lokal begrenzten weichen Bereichen des Blechteils mittels lokalem Tempern vorgegebener Teilbereiche des Blechteils durch ein Laserstrahlverfahren, bei dem die vorgegeben Teilbereiche einem Laserstrahl ausgesetzt werden, wobei im Blechbauteil mittels Presshärten Martensitbereiche gebildet werden, **dadurch gekennzeichnet, dass** mittels anschließendem lokalen Tempern in den vorgegebenen Teilbereichen oder im Bereich der lokal begrenzten weichen Teilbereiche Neumartensitbereiche gebildet werden, wobei zumindest 30% der Umfangslinie des lokal begrenzten weichen Teils in denen Neumartensit oder angelassener Martensit gebildet wird, in einem Randbereich des Blechbauteils liegt.

2. Verfahren nach Anspruch 1, **dadurch gekennzeichnet, dass** im Blechbauteil in den vorgegebenen Teilbereichen oder zwischen Marteinsitbereichen und Neumartensitbereichen mittels lokalem Tempern Zonen aus angelassenem Martensit gebildet werden.

3. Verfahren nach einem der vorhergehenden Ansprüche, **dadurch gekennzeichnet, dass** das Blechteil mittels Presshärten auf eine Härte von zumindest 400HV10, vorzugsweise von zumindest 470HV10, besonders bevorzugt von zumindest 500HV10 gebracht und mittels lokalem Tempern in den lokal begrenzten weichen Bereichen, soweit diese nicht Neumartensit aufweisen, auf eine Härte von höchstens 350HV10, vorzugsweise von höchstens 330HV10 gebracht wird.

4. Verfahren nach Anspruch 3, **dadurch gekennzeichnet, dass** das Blechteil in an den lokal begrenzten weichen Bereichen angrenzenden Übergangsbereichen mittels lokalem Tempern auf eine Härte zwischen 220HV10 und 470HV10 gebracht wird.

5. Verfahren nach einem der vorhergehenden Ansprüche, **dadurch gekennzeichnet, dass** ein Bilden von lokal begrenzten weichen Teilbereichen mittels lokalem Tempern mittels eines Laserstrahls einer Anlage zum Laserbeschnitt oder einer Anlage zum Zusammenbau von Blechbauteilen erfolgt.

6. Verfahren nach einem der vorhergehenden Ansprüche, **dadurch gekennzeichnet, dass** ein Bilden von Neumartensitbereichen in Teilbereichen des Blechteils erfolgt, in denen Fügepunkte oder Fügebereiche vorgesehen sind.

7. Verfahren nach einem der vorhergehen Ansprüche, **dadurch gekennzeichnet, dass** ein Laserstrahlverfahren mit einer Temperaturregelung eingesetzt wird.

8. Vorrichtung zur Durchführung des Verfahrens nach einem der vorhergehenden Ansprüche umfassend
- zumindest ein Umformpresswerkzeug zur Presshärtung des Blechbauteils,
- Mittel zum Entnehmen und Transportieren des Blechbauteils aus dem Umformpresswerkzeug zu einer Arbeits- oder Lagerungsstation,
und mit einem Mittel zum Bilden von lokal begrenzten weichen Bereichen des Blechteils mittels lokalem Tempern vorgegebener Teilbereiche des Blechteils, das als eine Laserstrahlvorrichtung ausgebildet ist, in der die vorgegeben Teilbereiche einem Laserstrahl ausgesetzt werden können, **dadurch gekennzeichnet, dass** es sich bei der Laserstrahlvorrichtung um den Laser einer Anlage zum Laserbeschnitt oder einer Anlage zum Zusammenbau von Blechbauteilen handelt.

## Claims

1. Method for the heat treatment of a quenchable sheet metal component, in particular for a motor vehicle, involving
- press-quenching the sheet metal component in a machine press,
- removing the sheet metal component from the machine press,
forming locally delimited soft regions of the sheet metal part by localized tempering of predefined part regions of the sheet metal part by means of a laser beam method, in which the predefined part regions are exposed to a laser beam, wherein martensite regions are created in the sheet metal component by press-quenching, **characterized in that** new martensite regions are formed by subsequent localized tempering in the predefined part regions or in the region of the locally delimited soft part regions, wherein at least 30% of the periphery line of the locally delimited soft part, in which new martensite or tempered martensite is formed, lies in a rim region of the sheet metal component.

2. Method according to Claim 1, **characterized in that**, in the sheet metal component in the predefined part regions, or between martensite regions and new martensite regions, zones of tempered martensite are created by means of localized tempering.

3. Method according to either of the preceding claims, **characterized in that** the sheet metal part is brought by press-quenching to a hardness of at least 400HV10, preferably at least 470HV10, particularly preferably at least 500HV10, and is brought by localized tempering in the locally delimited soft regions - insofar as these do not contain new martensite - to a hardness of at most 350HV10, preferably of at most 330HV10.

4. Method according to Claim 3, **characterized in that** the sheet metal part is brought by localized tempering, in transition regions adjoining the locally delimited soft regions, to a hardness of between 220HV10 and 470HV10.

5. Method according to one of the preceding claims, **characterized in that** formation of locally delimited soft part regions by localized tempering takes place using a laser beam of a plant for laser cutting or a plant for the assembly of sheet metal components.

6. Method according to one of the preceding claims, **characterized in that** formation of new martensite regions takes place in part regions of the sheet metal part which are intended to contain joining points or joining regions.

7. Method according to one of the preceding claims, **characterized in that** use is made of a temperature-controlled laser beam method.

8. Apparatus for carrying out the method according to one of the preceding claims, comprising
- at least one machine press for press-quenching the sheet metal component,
- means for removing and transporting the sheet metal component from the machine press to a machining or storage station,
and having a means for forming locally delimited soft regions of the sheet metal part by localized tempering of predefined part regions of the sheet metal part, which is designed as a laser beam device in which the predefined part regions can be exposed to a laser beam, **characterized in that** the laser beam device is the laser of a plant for laser cutting or of a plant for the assembly of sheet metal components.

## Revendications

1. Procédé de traitement thermique d'une pièce en tôle pouvant être trempée, en particulier formation pour un véhicule automobile, par
- trempe sur presse de la pièce en tôle dans un outil de presse de formage,
- enlèvement de la pièce de tôle hors de l'outil de presse de formage,
de zones adoucies localement limitées de la pièce en tôle au moyen d'un recuit local de zones partielles prédéterminées de la pièce en tôle au moyen d'un procédé au faisceau laser, dans lequel les zones partielles prédéterminées sont exposées à un faisceau laser, dans lequel on forme dans la pièce en tôle des zones de martensite au moyen d'une trempe sur presse, **caractérisé en ce que** l'on forme par un recuit local ultérieur des zones de nouvelle martensite dans les zones partielles prédéterminées ou dans la région des zones partielles adoucies localement limitées, dans lequel au moins 30 % du pourtour de la zone douce localement limitée dans laquelle de la nouvelle martensite ou de la martensite revenue est formée, se situent dans une région de bord de la pièce en tôle.

2. Procédé selon la revendication 1, **caractérisé en ce que** l'on forme dans la pièce en tôle des zones de martensite revenue dans les zones partielles prédéterminées ou entre des zones de martensite et des zones de nouvelle martensite au moyen d'un recuit local.

3. Procédé selon l'une quelconque des revendications précédentes, **caractérisé en ce que** l'on porte la pièce en tôle, par une trempe sur presse, à une dureté d'au moins 400HV10, de préférence d'au moins 470HV10, de préférence encore d'au moins 500HV10 et on la porte, au moyen d'un recuit local dans les zones adoucies localement limitées, dans la mesure où celles-ci ne présentent pas de nouvelle martensite, à une dureté d'au plus 350HV10, de préférence d'au plus 330HV10.

4. Procédé selon la revendication 3, **caractérisé en ce que** l'on porte la pièce en tôle, dans des régions de transition adjacentes aux zones adoucies localement limitées, au moyen d'un recuit local à une dureté comprise entre 220HV10 et 470HV10.

5. Procédé selon l'une quelconque des revendications précédentes, **caractérisé en ce que** l'on effectue une formation de zones partielles adoucies localement limitées au moyen d'un recuit local à l'aide d'un faisceau laser d'une installation de découpage au laser ou d'une installation d'assemblage de pièces en tôle.

6. Procédé selon l'une quelconque des revendications précédentes, **caractérisé en ce que** l'on effectue une formation de zones de nouvelle martensite dans des zones partielles de la pièce en tôle, dans lesquelles il est prévu des points de jonction ou des zones de jonction.

7. Procédé selon l'une quelconque des revendications précédentes, **caractérisé en ce que** l'on utilise un procédé à faisceau laser avec une régulation de la température.

8. Dispositif pour la mise en oeuvre du procédé selon l'une quelconque des revendications précédentes, comprenant
- au moins un outil de presse de formage pour la trempe sur presse de la pièce en tôle,
- des moyens pour enlever et transporter la pièce en tôle hors de l'outil de presse de formage vers une station de travail ou de stockage,
et avec un moyen pour former des zones adoucies localement limitées de la pièce en tôle au moyen d'un recuit local de zones partielles prédéterminées de la pièce en tôle, qui est réalisé sous la forme d'un dispositif à faisceau laser, dans lequel les zones partielles prédéterminées peuvent être exposées à un faisceau laser, **caractérisé en ce que** le dispositif à faisceau laser est le laser d'une installation de découpage au laser ou d'une installation d'assemblage de pièces en tôle.
